# EUROPEAN PATENT SPECIFICATION

(11) **EP 0 759 338 B1**
(45) Date of publication and mention of the grant of the patent: **31.05.2000**
(21) Application number: 96830428.7
(22) Date of filing: 31.07.1996
(51) Int. Cl.: B23P 19/04, B21D 53/74, F16B 11/00, E06B 3/964

(54) **A system for securing with the aid of adhesives the components of a frame for casings made of metal sections, in correspondence with the oblique angular connections**
System zum Verbinden, mit Hilfe von Klebstoffen, die Teile eines aus metallischen Profilen hergestellten Rahmens für Gehäuse, in Zusammenhang von schrägen Eckverbindungen
Système pour la fixation, à l'aide d'adhésifs, de pièces d'un cadre à profilés métalliques pour boîtiers, en correspondance avec les connexions angulaires obliques

(30) Priority: 04.08.1995 IT FI950173
(43) Date of publication of application: 26.02.1997
(73) Proprietor: ATLA COOP. Soc. Coop. a r.l., I-50037 San Piero a Sieve, Firenze (IT)
(72) Inventor: Parigi, Stefano, 50041 Calenzano, Firenze (IT); Santini, Paolo, 50041 Calenzano, Firenze (IT)
(74) Representative: Mannucci, Gianfranco, Dott.-Ing.

(56) References cited:
- EP-A- 0 563 018
- EP-A- 0 618 032
- DE-A- 2 757 886
- DE-A- 4 307 893
- DE-C- 4 100 946
- DE-U- 8 621 143

## Description

In the assembly of frames of casings made of metal sections, especially of aluminium, said sections are obliquely cut, generally at 90°, and connected to one another. The joining of two sections in correspondence with a corner of the frame is carried out by means of squarings, the wings of which are each threaded into a cavity of one of said sections, the fixing together of the two sections and of the squaring being secured by means of bevelling of the ends of the sections in correspondence with appropriate cavities of said squaring and/or by means of an injection of adhesive, generally a two-component adhesive.

In order to bevel and pierce the sections - for example at the junction corner and at one or more points in correspondence with the wings of the squaring - and subsequently to inject said adhesive through such holes, use is made of systems for automating such operations. Such systems generally comprise a seating for the components to be assembled (sections and squaring) and bevelling implements capable of causing the deformations of walls of the sections to abut against corresponding abutments which are present in the squaring; there are further provided a piercing implement and an injection implement, which are arranged to act on the external corner formed by the two abutting sections. The active portions of said two implements act substantially in a plane bisecting the dihedral defining the corner of the casing. In other solutions, two implements are provided on one side and two further implements are provided on the other side of the plane bisecting the dihedral formed by the two sections which have been obliquely cut and coupled.

The object of the invention is to simplify the structure of the system, to permit greater flexibility in the functions and of the handling operations, etc. These and other objects and advantages will be clear from the text which follows.

According to the invention, there is provided a system comprising an angularly movable device, on which a perforation assembly and an injection assembly are mounted, said device being positionable in an intermediate position in which said assemblies act on the corner, and in at least one lateral position, in which said assemblies act on one side of the frame, towards one end of a section.

Preferably, said device is positionable in one or in the other of two opposite lateral positions, which may possibly be adjustable, and is movable about a column having its axis orthogonal to the position of the frame to be assembled.

In an embodiment of the invention, the movable device is slidable on curved guides, and lockable on the latter.

The system may comprise an actuator for the angular displacements of said device.

The invention will be better understood upon following the description and the accompanying drawing which shows a practical non-limiting embodiment of said invention. In the drawing:
Fig. 1 shows a partial lateral view of a system according to the invention, which system is shown in partial cross-section according to vertical planes;

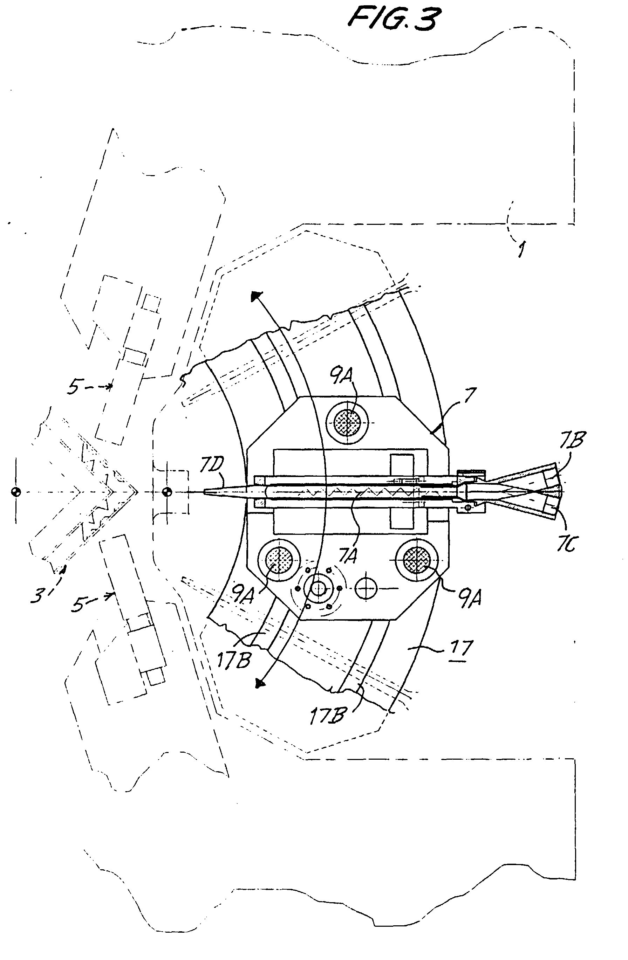

Fig. 2, 3 and 4 show plan views of the system of Fig. 1, which system is shown in cross-section according to horizontal planes of representation II-II, III-III and IV-IV respectively.

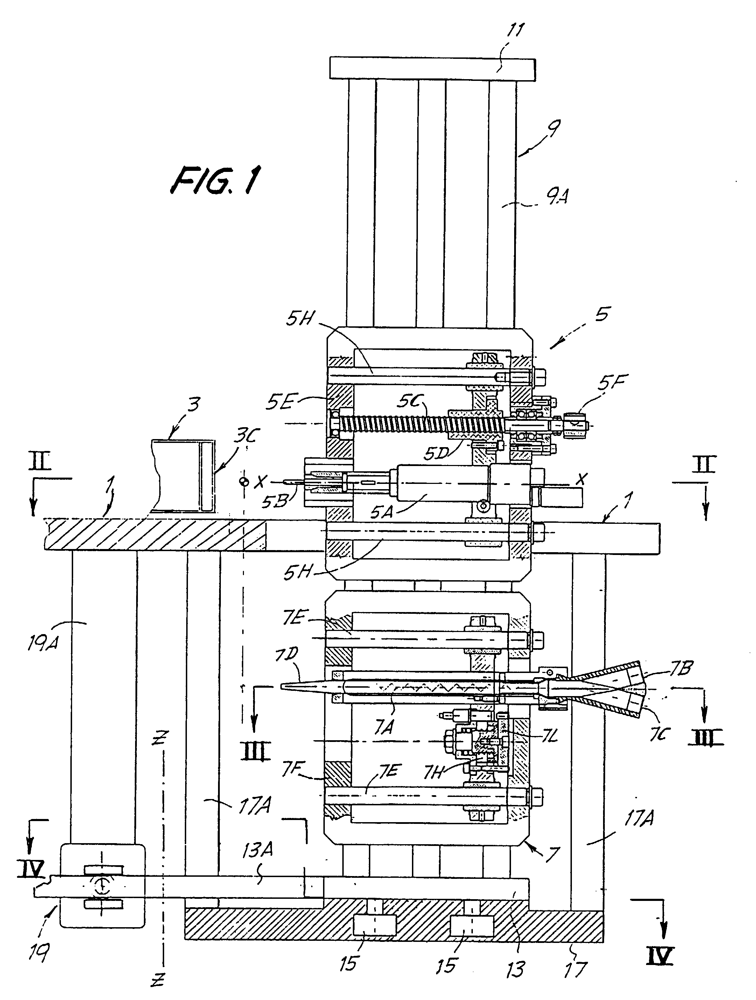

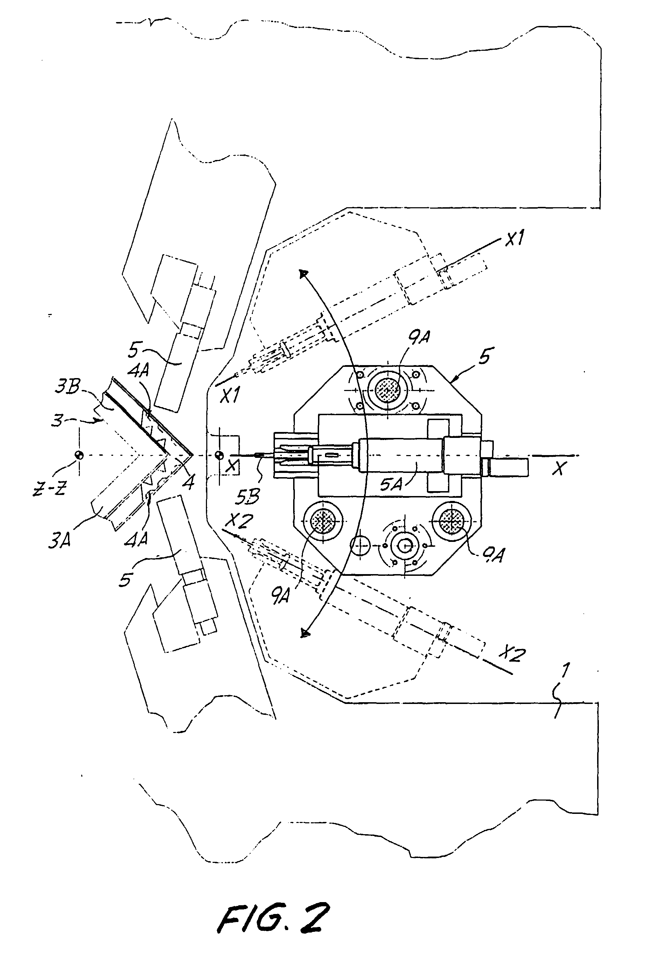

The system comprises a platform 1 (Fig. 1), on which there are positioned the frames 3 which have been preassembled by the fixing together of the oblique joints of the sections 3A, 3B (Fig. 2) which form them, by means of a squaring 4. The system comprises two bevelling tools 5 for deforming walls of such sections in correspondence with cavities 4A of the squaring 4 in such a manner as to obtain a permanent fixing between the squaring and said sections.

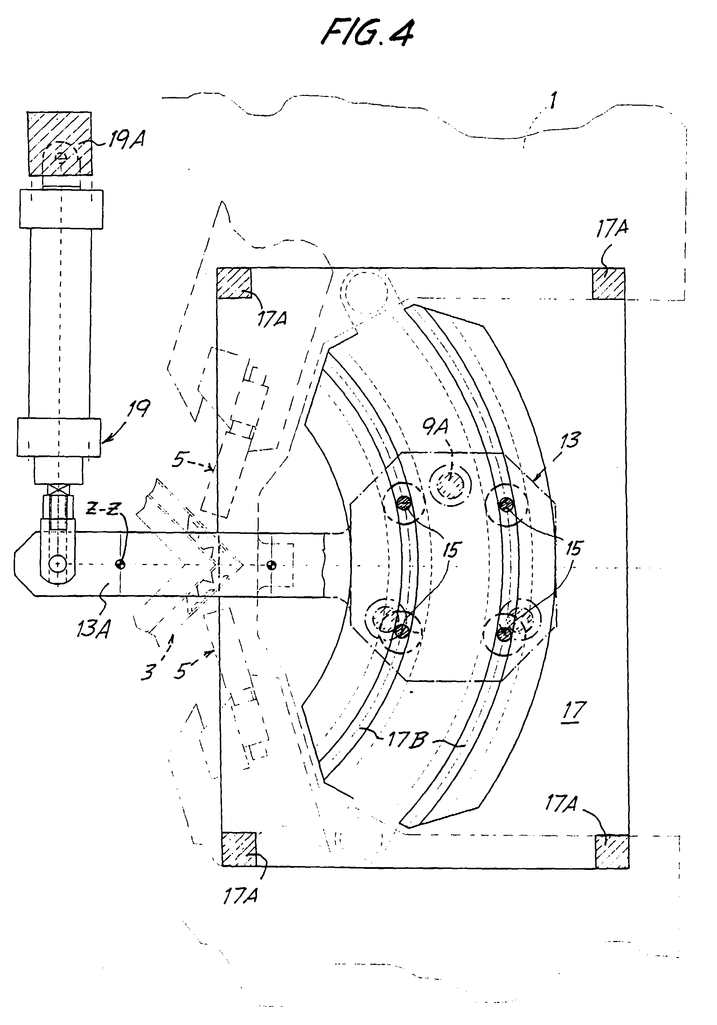

The system is employed to undertake an operation for a fixing and for the sealing of the oblique joint, this operation comprising the formation of holes in correspondence with and in proximity to the junction corner of the sections and the subsequent injection of a two-component adhesive through such holes, to lock inter se the sections and the squaring. To this end, the system comprises a perforation unit 5 and an adhesive injection unit 7, said units being mounted in slidable fashion on a movable device 9 comprising three vertical guides 9A. The guides 9A are connected to one another by end plates 11, 13, the lower plate 13 being coupled, by means of runners or rollers 15, to a support plate 17 which is fixed - by means of columns 17A - beneath the platform 1. Said runners or said rollers 15 are retained, with slight play, in curved channels 17A of the support plate 17 (Figs. 1 and 4) to enable the movable device 9 to execute partial rotations about a vertical axis Z-Z. It is not ruled out that the movable device 9 may be mounted on a column with axis Z-Z.

The perforation unit 5 comprises a piercing head 5A equipped with a piercing tip 5B (Fig. 1); the head is caused to advance on guides 5H towards the frame to be pierced by means of a screw 5C with nut 5D, the screw being supported by means of pads by a closed-frame structure 5E of the perforation unit, and said structure also carries said guides 5H. The screw 5C is set into rotation by a toothed wheel 5F which is keyed onto said screw and caused to rotate by an electric motor, by means of a transmission (not shown). Fig. 2 shows, in solid lines, said piercing head 5A positioned to form a hole according to an axis X-X in correspondence with the corner of the oblique configuration.

The adhesive injection unit 7 comprises a nozzle 7A to which the two components of the adhesive are fed by means of flexible tubes (not shown), one end of which tubes is connected respectively to apertures 7B, 7C situated in the rear portion of the nozzle 7, while the other end of the tubes is connected to a dual metering pump (not shown). The nozzle has an injection mouth 7D capable of penetrating into the hole previously formed in walls such as the 3B of the sections, in order to inject therein the components of the adhesive which have been premixed with one another. The nozzle is able to slide parallel to the axis of the piercing tip 5B by means of slide guides 7E carried by a closed-frame structure 7F. The advance and the return of the nozzle are effected by a jack actuator 7H, the base 7L of which is supported against said closed frame 7F.

The operation of the system provides for the corner perforation of the oblique joint in the position of the perforation unit according to the axis X-X illustrated in Figs. 1 and 2, and then the lifting of the piercing and injection unit so as to bring the mouth 7D of the nozzle opposite to the hole which has just been formed. By means of the jack 7H, the nozzle is then caused to advance so as to be introduced partially and in contact with the entrance to said hole, and the adhesive is injected to penetrate into the components of the frame (drawn parts and squaring), sealing them and fixing them to one another.

The operation may be performed - in addition to the abovementioned corner operation, or by way of replacement for the latter - having first rotated the device 9, causing the plate 13 to slide along the curved guides 17A or however about the axis Z-Z to reach an angular position corresponding to an axis of piercing X1-X1 (indicated in broken lines in Fig. 2) of the perforation unit, and, on a second occasion, having rotated the plate 13 so as to reach a second angular position, corresponding to an axis of piercing X2-X2, which is in most cases symmetrically opposite the axis X1-X1. Advantageously, such positions are determined by adjustable abutments (not shown) between the device 9 and the fixed part of the system. The angular displacement of the device 9 of the two units on the plate 17 may be obtained by means of a jack 19 articulated to a column 19A fixed beneath the platform 1 and to the end of a bar 13A which is solid with the plate 13, or in some other suitable manner.

It is understood that the drawing shows only one example which is given solely as a practical demonstration of the invention, it being possible for this invention to vary in forms and arrangements within the scope of the appended claims. The possible presence of reference numerals in the appended claims has the objective of facilitating the reading of the claims with reference to the description and to the drawing, and does not limit the scope of the protection represented by the claims.

## Claims

1. A system for securing the components of a frame (3) for casings made of metal sections by means of squarings (4) for the oblique angular connections, with the aid of adhesive, in most cases comprising two components, which is injected under pressure through holes in the sections and ducts in the squarings, characterized in that it comprises an angularly movable device (9), on which the perforation assembly (5) and the injection assembly (7) are mounted, said device being positionable in an intermediate position, in which said assemblies act on the corner, and in at least one lateral position, in which said assemblies act on one side of the frame, towards one end of a section.

2. System according to Claim 1, characterized in that said device (9) is positionable in one or in the other of two opposite lateral positions (P1, P2).

3. System according to Claim 1 or 2, characterized in that said lateral position or positions are adjustable.

4. System according to any one of the preceding claims, characterized in that said device (9) is movable about a column of axis (Z-Z) which is orthogonal to the position of the frame to be assembled.

5. System according to one of Claims 1 or 3 and optionally 4, characterized in that said device is slidable on curved guides (17A) and lockable on the latter.

6. System according to any one of the preceding claims, characterized in that it comprises an actuator (19) for the angular displacements of said device.

## Patentansprüche

1. System zum Befestigen der Komponenten eines Rahmens (3) für aus Metallsektionen bestehende Gehäuse mittels Eckwinkeln für die Gehrungs-Eckverbindungen, mittels eines Klebstoffes, in der Regel Zweikomponentenkleber, der unter Druck durch Löcher in den Profilabschnitten und Kanäle in den Eckwinkeln eingespritzt wird,
dadurch **gekennzeichnet**, daß es eine winkelbewegliche Einrichtung (9) umfaßt, auf der die Perforationsbaugruppe (5) und die Einspritzbaugruppe (7) angeordnet sind, wobei die Einrichtung in einer Zwischenposition positionierbar ist, in der die Baugruppen auf die Ecke einwirken, und in mindestens eine seitliche Stellung, in der die Baugruppen auf einer Seite des Rahmens in Richtung auf das eine Ende einer Sektion einwirken.

2. System nach Anspruch 1,
dadurch **gekennzeichnet**, daß die Einrichtung (9) in der einen oder anderen von zwei gegenüberliegenden seitlichen Stellungen (P1, P2) positionierbar ist.

3. System nach Anspruch 1 oder 2,
dadurch **gekennzeichnet**, daß die seitliche Position oder seitlichen Positionen einstellbar sind.

4. System nach einem der vorangehenden Ansprüche,
dadurch **gekennzeichnet**, daß die Einrichtung (9) um eine Säule bewegbar ist, deren Achse (Z-Z) senkrecht zur Position des zusammenzufügenden Rahmens verläuft.

5. System nach Anspruch 1 oder 3 und ggf. 4,
dadurch **gekennzeichnet**, daß die Einrichtung auf gekrümmten Führungen (17a) verschiebbar und an diesen festlegbar ist.

6. System nach einem der vorangehenden Ansprüche,
dadurch **gekennzeichnet**, daß sie eine Betätigungseinrichtung (19) für die Winkelbewegungen der Einrichtung aufweist.

## Revendications

1. Système pour la fixation des pièces d'un cadre (3) pour des boîtiers constitués par des profilés métalliques, à l'aide de gabarits d'équerrage (4) pour les raccordements angulaires obliques, à l'aide d'un adhésif, comprenant dans la plupart des cas deux constituants, injecté sous pression à travers des trous des profilés et des conduits des gabarits d'équerrage, caractérisé en ce qu'il comprend un dispositif (9) à mobilité angulaire sur lequel sont montés l'assemblage de perforation (5) et l'assemblage d'injection (7), ledit dispositif pouvant être placé dans une position intermédiaire, dans laquelle lesdits assemblages agissent sur l'angle, et dans au moins une position latérale, dans laquelle lesdits assemblages agissent sur un côté du cadre, vers une extrémité d'un profilé.

2. Système selon la revendication 1, caractérisé en ce que ledit dispositif (9) peut être placé dans l'une ou l'autre de deux positions latérales opposées (P1, P2).

3. Système selon la revendication 1 ou 2, caractérisé en ce que ladite ou lesdites position(s) est/sont réglable(s).

4. Système selon l'une quelconque des revendications précédentes, caractérisé en ce que ledit dispositif (9) est mobile autour d'un colonne à axe (Z-Z) perpendiculaire à la position du cadre à assembler.

5. Système selon l'une des revendications 1 et 3, et éventuellement 4, caractérisé en ce que ledit dispositif peut coulisser sur des guides courbes (17A) et peut être verrouillé sur ces derniers.

6. Système selon l'une quelconque des revendications précédentes, caractérisé en ce qu'il comprend un vérin (19) pour les déplacements angulaires dudit dispositif.
